# EUROPEAN PATENT APPLICATION

(11) **EP 4 668 352 A1**
(43) Date of publication of application: **24.12.2025**
(21) Application number: 24877493.7
(22) Date of filing: 08.10.2024
(51) Int. Cl.: H01M 4/13, H01M 4/36, H01M 4/139, H01M 10/052, H01M 4/02

(54) **POSITIVE ELECTRODE FOR SECONDARY BATTERY, LITHIUM SECONDARY BATTERY COMPRISING SAME, AND MANUFACTURING METHOD THEREFOR**

(30) Priority: 13.10.2023 KR 20230136814
(71) Applicant: LG Energy Solution, Ltd., Seoul 07335 (KR)
(72) Inventor: KANG, Sora, Daejeon 34122 (KR); KWON, Hyejin, Daejeon 34122 (KR); KIM, Sohee, Daejeon 34122 (KR); LEE, Choonghyeon, Daejeon 34122 (KR); KIM, Myeongsoo, Daejeon 34122 (KR); CHOI, Seokin, Daejeon 34122 (KR); OH, Kyungbae, Daejeon 34122 (KR)
(74) Representative: Goddar, Heinz J.
(86) International application number: PCT/KR2024/015266
(87) International publication number: WO 2025/079956

(57) **Abstract**

The present invention relates to a positive electrode for a secondary battery, a lithium secondary battery comprising the same and a method of manufacturing the same.

## Description

### [Cross-reference to related application(s)]

The present application claims the benefit of priority based on Korean Patent Application No. 10-2023-0136814, filed on October 13, 2023, the contents of which are incorporated herein by reference as part of this specification.

### [Field]

The present invention relates to a positive electrode for a secondary battery, a lithium secondary battery comprising the same and a method of manufacturing the same.

### [Background Art]

A secondary battery refers to a device that converts external electrical energy into chemical energy for storage and generates electricity when needed. The term rechargeable battery is also used to mean that it can be charged multiple times. Common secondary batteries include lead-acid batteries, nickel-cadmium (NiCd) batteries, nickel-metal hydride (NiMH) batteries, and lithium secondary batteries. Secondary batteries provide both economic and environmental advantages compared to primary batteries that are used once and discarded.

Meanwhile, as wireless communication technology continues to develop, there is an increasing demand for secondary batteries as energy sources for portable devices or automobile accessories that require lightweight, thin, and compact designs. In particular, as hybrid vehicles and electric vehicles are being commercialized to prevent environmental pollution, research is emerging to use secondary batteries in next-generation vehicle batteries to reduce manufacturing costs and weight while extending life. Among various secondary batteries, lithium secondary batteries that are lightweight, have high energy density and operating voltage, and long cycle life are recently drawing attention.

Generally, a lithium secondary battery is manufactured by mounting an electrode assembly consisting of a negative electrode, positive electrode and separator inside a cylindrical or prismatic metal can or a pouch-type case made of aluminum laminate sheet, and injecting electrolyte into the interior of the electrode assembly.

Conventionally, a liquid electrolyte made by dissolving lithium salt in a non-aqueous organic solvent has been mainly used as an electrolyte for lithium secondary batteries. However, such liquid electrolytes have high possibility of electrode material deterioration and organic solvent evaporation, as well as concerns about combustion or explosion due to ambient temperature and battery temperature rise, and risk of leakage, making it difficult to implement various types of lithium secondary batteries with high safety.

Meanwhile, all-solid-state batteries using solid electrolytes have advantages in that they can be manufactured in a safe and simple form of electrode assembly because there is no risk of leakage.

In manufacturing the all-solid-state battery, solid electrolyte needs to be added to the electrode, which causes a problem of reduced energy density of the battery.

In addition, as the content of active material in the electrode increases, cracks occur in the electrode active material during pressing process, and voids occur at the interface between electrode active material and solid electrolyte due to the non-fluid properties of the solid electrolyte.

Therefore, development of electrode active materials that can reduce crack generation in electrode active materials while securing improved battery life and high rate characteristics is needed.

### [Prior Art Documents]

### [Patent Documents]

(Patent Document 1) Korean Patent Publication No. 10-2019-0139033 (Dec. 17, 2019)

### [Detailed Description of Invention]

### [Technical Problems]

The inventors have conducted various research to solve the above problems and completed the present invention by confirming that a battery with improved life characteristics can be manufactured by using a positive electrode comprising a first positive electrode layer including primary particles and a second positive electrode layer including secondary particles, since crack generation in the positive electrode active material is reduced.

Therefore, an object of the present invention is to provide a positive electrode for a secondary battery that can implement high energy density by reducing resistance from a positive electrode containing high content of the positive electrode active material and suppressing side reactions through uniform charge/discharge.

Another object of the present invention is to provide a positive electrode for a secondary battery and a secondary battery comprising the same with improved life characteristics by suppressing side reactions between a conductive material and a solid electrolyte.

### [Technical Solution]

According to one aspect of the present invention, there is provided a positive electrode for a secondary battery, the positive electrode comprising a first positive electrode layer and a second positive electrode layer, wherein the first positive electrode layer comprises a first positive electrode active material composed of first active material particles having a primary particle form, and the second positive electrode layer comprises a second positive electrode active material composed of second active material particles having a secondary particle form in which primary particles are agglomerated.

There is provided a positive electrode for a secondary battery, wherein the content of the first positive electrode active material is 90 wt% or more based on the total weight of the first positive electrode layer.

There is provided a positive electrode for a secondary battery, wherein when the content of the first positive electrode active material is 90 wt% or more based on the total weight of the first positive electrode layer, the first positive electrode active material comprises a first coating layer on the surface of the first active material particles, and the first coating layer comprises solid electrolyte.

There is provided a positive electrode for a secondary battery, wherein the first coating layer includes an island shape partially exposing the surface of the first active material particles.

There is provided a positive electrode for a secondary battery, wherein the content of the first coating layer is 5 wt% or less based on the total weight of the first positive electrode layer.

There is provided a positive electrode for a secondary battery, wherein the solid electrolyte is a sulfide-based solid electrolyte, oxide-based solid electrolyte or halide-based solid electrolyte.

There is provided a positive electrode for a secondary battery, wherein when the content of the first positive electrode active material is 90 wt% or more based on the total weight of the first positive electrode layer, the first positive electrode active material does not contain a conductive material.

There is provided a positive electrode for a secondary battery, wherein the positive electrode is interposed between a solid electrolyte layer and a positive electrode current collector, the first positive electrode layer is in contact with one surface of the solid electrolyte layer, and the second positive electrode layer is in contact with one surface of the current collector.

There is provided a positive electrode for a secondary battery, wherein the content of the second positive electrode active material is 50 wt% or more and less than 90 wt% based on the total weight of the second positive electrode layer.

There is provided a positive electrode for a secondary battery, wherein the secondary battery is an all-solid-state battery.

There is provided a positive electrode for a secondary battery, wherein the positive electrode is a dry electrode.

There is provided a positive electrode for a secondary battery, wherein the loading level of the positive electrode is 7 mAh/cm² or more.

According to one aspect of the present invention, there is provided a method of manufacturing a positive electrode for a secondary battery, comprising:
(S1) preparing a first mixture comprising a first positive electrode active material, solid electrolyte, conductive material and/or binder;
(S2) preparing a second mixture comprising a second positive electrode active material, solid electrolyte, conductive material and/or binder;
(S3) pressing each of the first mixture and second mixture to prepare a first positive electrode plate and a second positive electrode plate; and
(S4) pressing after bringing the first positive electrode plate and second positive electrode plate into contact with each other.

There is provided a method of manufacturing a positive electrode for a secondary battery wherein in steps (S1) and (S2), solvent is not included.

According to one aspect of the present invention, there is provided a lithium secondary battery comprising the positive electrode, a negative electrode, and a solid electrolyte interposed between the positive electrode and negative electrode.

### [Effect of Invention]

The present invention can provide a high-loading battery by minimizing crack generation in a positive electrode active material during charge/discharge, reducing resistance, suppressing side reactions between a conductive material and solid electrolyte, and implementing high energy density of the secondary battery.

### [Brief Description of the Drawings]

FIG. 1 is a schematic diagram of a secondary battery according to one embodiment of the present invention.
FIG. 2 is a schematic diagram of a secondary battery according to one embodiment of the present invention.
FIG. 3 is a schematic diagram of a positive electrode for a secondary battery according to one embodiment of the present invention.

### [Best Mode for Carrying out the Invention]

Hereinafter, the present invention will be described in more detail.

Terms or words used in this specification and claims should not be interpreted as limited to ordinary or dictionary meanings, but should be interpreted as meanings and concepts consistent with the technical idea of the present invention based on the principle that the inventor can appropriately define the concepts of terms to describe their invention in the best way.

The terms used herein are used only to describe specific embodiments and are not intended to limit the present invention. Expressions of the singular number include plural expressions unless the context clearly indicates otherwise. In the present invention, the terms "include" or "have" etc. are used to specify the presence of features, numbers, steps, operations, components, parts or combinations thereof described in the specification, and should be understood as not precluding in advance the presence or possibility of addition of one or more other features, numbers, steps, operations, components, parts or combinations thereof.

In manufacturing all-solid-state batteries, while solid electrolyte must be added to the electrode to secure ion conduction, there is a problem that the energy density is relatively low. In addition, as the content of an electrode active material increases, cracks occur in the electrode active material during the pressing process required for battery manufacturing, and due to the low fluidity characteristics of solid electrolyte, non-uniform charge/discharge occurs, causing side reactions between a conductive material and solid electrolyte.

In the present invention, it is aimed to provide a positive electrode for a high-loading secondary battery containing high content of electrode active material without generating cracks in the electrode active material.

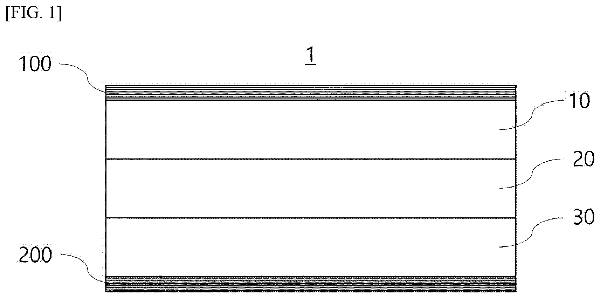

Hereinafter, before specifically describing the positive electrode for a secondary battery according to one embodiment of the present invention with reference to FIG. 1, the configuration of the secondary battery comprising the positive electrode will be briefly described first.

FIG. 1 is a schematic diagram of a lithium secondary battery according to one embodiment of the present invention.

Referring to FIG. 1, the lithium secondary battery 1 comprises a positive electrode 10, solid electrolyte 20 and negative electrode 30, and a positive electrode current collector 100 is disposed on one side of the positive electrode 10, and a negative electrode current collector 200 is disposed on one side of the negative electrode 30.

According to one embodiment, the lithium secondary battery 1 may comprise the positive electrode 10 according to one embodiment of the present invention, a negative electrode 30, and a solid electrolyte 20 interposed between the positive electrode 10 and negative electrode 30.

Hereinafter, the positive electrode according to one embodiment of the present invention will be described more specifically.

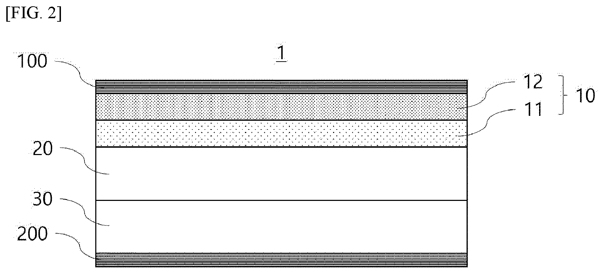

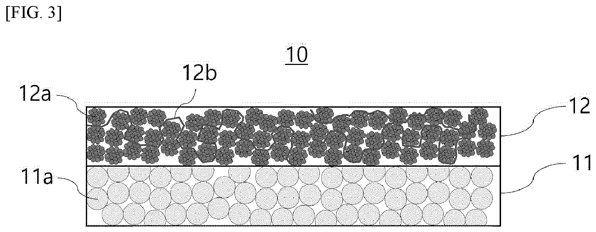

FIG. 2 is a schematic diagram of a lithium secondary battery according to one embodiment of the present invention, and FIG. 3 is a schematic diagram of a positive electrode for a secondary battery according to one embodiment of the present invention.

Referring to FIG. 2, the positive electrode 10 comprises a first positive electrode layer 11 and a second positive electrode layer 12.

Also, referring to FIG. 3, the first positive electrode layer 11 may comprise a first positive electrode active material composed of first active material particles 11a having a primary particle form. In the present invention, primary particles refer to a primary structure of single particles.

The second positive electrode layer 12 may comprise a second positive electrode active material composed of second active material particles 12a having a secondary particle form in which primary particles are agglomerated. In the present invention, secondary particles refer to an agglomerate, i.e., a secondary structure, in which primary particles are agglomerated by physical or chemical bonding between primary particles without agglomeration or granulation process.

The second positive electrode layer 12 may further comprise a binder 12b.

According to one embodiment of the present invention, the content of the first positive electrode active material may be 90 wt% or more based on the total weight of the first positive electrode layer. More specifically, the content of the first positive electrode active material may be 90 wt% or more, 90.5 wt% or more, 91 wt% or more, 91.5 wt% or more, 92 wt% or more, 92.5 wt% or more, 93 wt% or more, 93.5 wt% or more, 94 wt% or more, 94.5 wt% or more, 95 wt% or more, 95.5 wt% or more, 96 wt% or more, 96.5 wt% or more, 97 wt% or more, 97.5 wt% or more, 98 wt% or more based on the total weight of the first positive electrode layer.

Also, when the content of the first positive electrode active material is 90 wt% or more based on the total weight of the first positive electrode layer, the first positive electrode active material may comprise a first coating layer on the surface of the first active material particles, and the first coating layer may comprise solid electrolyte.

The first coating layer may include an island shape partially exposing the surface of the first active material particles.

By including a first coating layer of solid electrolyte on the surface of the first active material particles, ion conductivity can be improved.

The content of the first coating layer may be 5 wt% or less based on the total weight of the first positive electrode layer. Specifically, the content of the first coating layer may be 5 wt% or less to 1 wt% or more based on the total weight of the first positive electrode layer. More specifically, the content of the first coating layer may be 1 wt% or more, 1.5 wt% or more, 2.0 wt% or more, 2.5 wt% or more, 3.0 wt% or more, or 5.0 wt% or less, 4.5 wt% or less, 4.0 wt% or less, 3.5 wt% or less, 3.0 wt% or less based on the total weight of the first positive electrode layer.

If the content of the first coating layer exceeds 5 wt% based on the total weight of the first positive electrode layer, voids are easily formed in the positive electrode plate, and electron conductivity is reduced due to thick coating layer.

Also, if the content of the first coating layer is less than 1 wt% based on the total weight of the first positive electrode layer, it is difficult to implement uniform ion conduction paths within the positive electrode plate.

The solid electrolyte may include one or more selected from the group consisting of sulfide-based solid electrolyte, oxide-based solid electrolyte and halide-based solid electrolyte, and preferably may include sulfide-based solid electrolyte. The solid electrolyte may be in particle form.

The sulfide-based solid electrolyte contains sulfur (S) and has ion conductivity of metals belonging to Group 1 or Group 2 of the periodic table, and may include Li-P-S based glass or LiP-S based glass ceramic.

Specifically, the sulfide-based solid electrolyte may include one or more selected from the group consisting of Li₆PS₅Cl, Li₆PS₅Br, Li₆PS₅I, Li₂S-P₂S₅, Li₂S-LiI-P₂S₅, Li₂S-LiI-Li₂O-P₂S₅, Li₂S-LiBr-P₂S₅, Li₂S-Li₂O-P₂S₃, Li₂S-Li₃PO₄-P₂S₅, Li₂S-P₂S₅-P₂S₃, Li₂S-P₂S₅-SiS₂, Li₂S-P₂S₅-SnS, Li₂S-P₂S₅-Al₂S₃, Li₂S-GeS₂ and Li₂S-GeS₂-ZnS, and preferably may include one or more selected from the group consisting of Li₆PS₅Cl, Li₆PS₅Br and Li₆PS₅I. The Li₆PS₅Cl, Li₆PS₅Br and Li₆PS₅I may be argyrodite type solid electrolytes. Also, the sulfide-based solid electrolyte may be in a form doped with trace elements, for example, Li₆PS₅Cl may be additionally doped with bromine (Br).

The oxide-based solid electrolyte may have ion conductivity of metals belonging to Group 1 or Group 2 of the periodic table and contain oxygen (O). For example, it may include one or more selected from LLTO-based compounds, Li₆La₂CaTa₂O₁₂, Li₆La₂ANb₂O₁₂ (where A is Ca or Sr), Li₂Nd₃TeSbO₁₂, Li₃BO_{2.5}N_{0.5}, Li₉SiAlO₈, LAGP-based compounds, LATP-based compounds, Li₁₊ₓTi₂₋ₓAlₓSi_{y} (PO₄) _{3-y} (where 0≤x≤1, 0≤y≤1), LiAlₓZr₂₋ₓ (PO₄)₃ (where 0≤x≤1, 0≤y≤1), LiTiₓZr₂₋ₓ (PO₄)₃ (where 0≤x≤1, 0≤y≤1), LISICON-based compounds, LIPON-based compounds, perovskite-based compounds, NASICON-based compounds and LLZO-based compounds.

The halide-based solid electrolyte (Li-M-X) contains halogen elements (X) and metal elements (M), where metals or semimetals with oxidation states of 2, 3 or 4 are mainly used as the metal elements (M). For example, M may be selected from the group consisting of Y, Sc, Cr, Mn, Fe, Co, Ni, Al, Ga, As, Sb, Bi, Mg, Ca, Zn, Cd, Tb, Dy, Ho, Er, Tm and Yb as metal elements, and X may be F, Cl or Br as halogen elements. Specifically, the halide-based solid electrolyte may be Li₃YCl₆, Li₃YBr₆, etc., but is not limited thereto.

When the content of the first positive electrode active material is 90 wt% or more based on the total weight of the first positive electrode layer, it may not include a conductive material. In this case, when a conductive material is not included in the first positive electrode active material, the content of electrolyte is relatively increased, enabling implementation of stable ion conduction paths, and battery performance can be improved since side reactions between a conductive material and an electrolyte do not occur.

The positive electrode 10 is interposed between the solid electrolyte layer 20 and the positive electrode current collector 100, and the first positive electrode layer 11 may be in contact with one surface of the solid electrolyte layer 20, and the second positive electrode layer 12 may be in contact with one surface of the positive electrode current collector 100.

By positioning the first positive electrode layer 11 on the surface in contact with the solid electrolyte layer 20, cracks generated during charge/discharge can be minimized. At this time, the first positive electrode active material in the first positive electrode layer 11 in contact with the solid electrolyte layer 20 is composed of first active material particles having a primary particle form, so despite high electrochemical reaction participation at the interface, the first active material particles in the first positive electrode layer 11 can suppress crack generation due to volume changes between first positive electrode active materials during charge/discharge process.

The content of the second positive electrode active material may be 50 wt% or more and less than 90 wt% based on the total weight of the second positive electrode layer. More specifically, the content of the second positive electrode active material may be 50 wt% or more, 51 wt% or more, 52 wt% or more, 53 wt% or more, 54 wt% or more, 55 wt% or more, 56 wt% or more, 57 wt% or more, 58 wt% or more, 59 wt% or more, or 60 wt% or more, and less than 90 wt%, 89 wt% or less, 88 wt% or less, 87 wt% or less, 86 wt% or less, 85 wt% or less, 84 wt% or less, 83 wt% or less, 82 wt% or less, 81 wt% or less, or 80 wt% or less based on the total weight of the second positive electrode layer.

If the content of the second positive electrode active material is 90 wt% or more based on the total weight of the second positive electrode layer, cracks occur in the active material during compression process due to low particle strength, making uniform reaction within the electrode plate difficult.

According to one embodiment of the present invention, the secondary battery may be an all-solid-state battery.

According to one embodiment of the present invention, the positive electrode may be a dry positive electrode.

According to one embodiment of the present invention, the loading level of the positive electrode may be 8 mAh/g or more.

Hereinafter, a method of manufacturing a positive electrode for a secondary battery according to one embodiment of the present invention will be described.

The method of manufacturing a positive electrode for a secondary battery includes the steps of:
(S1) preparing a first mixture comprising a first positive electrode active material, solid electrolyte, conductive material and/or binder;
(S2) preparing a second mixture comprising a second positive electrode active material, solid electrolyte, conductive material and/or binder;
(S3) pressing each of the first mixture and second mixture to prepare a first positive electrode plate and a second positive electrode plate; and
(S4) pressing after bringing the first positive electrode plate and second positive electrode plate into contact with each other.

In the method of manufacturing a positive electrode for a secondary battery, the first positive electrode active material, second positive electrode active material, solid electrolyte, conductive material and binder are as described above.

In steps (S1) and (S2), solvent may not be included. Generally, when manufacturing all-solid-state batteries containing solid electrolyte, they are mainly manufactured through wet processes, and it is difficult to increase the ratio of a positive electrode active material, making dry manufacturing difficult. However, the present invention can manufacture dry electrodes for high-loading all-solid-state batteries without using solvent.

In step (S3), the process of pressing each of the first mixture and second mixture may be pressed using a roll press.

In step (S4), the pressing may be conducted through roll press or isostatic pressing.

The positive electrode active material layer may include a conductive material and binder along with the aforementioned positive electrode active material. At this time, the conductive material is used to impart conductivity to the electrode, and anything having electron conductivity without causing chemical changes in the constituted battery can be used without particular limitation. Specific examples include graphites such as natural graphite or artificial graphite; carbon-based materials such as carbon black, acetylene black, ketjen black, channel black, furnace black, lamp black, thermal black, carbon fiber; metal powder or metal fiber such as copper, nickel, aluminum, silver; conductive whiskers such as zinc oxide, potassium titanate; conductive metal oxides such as titanium oxide; or conductive polymers such as polyphenylene derivatives, and one kind alone or mixtures of two or more kinds thereof may be used. The conductive material may typically be included in an amount of 1 to 30 wt% based on the total weight of the positive electrode active material layer.

Also, the binder serves to improve adhesion between positive electrode active material particles and adhesion between positive electrode active material and positive electrode current collector. Specific examples include polyvinylidene fluoride (PVDF), vinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, tetrafluoroethylene, polyethylene, polypropylene, ethylene-propylene-diene polymer (EPDM), sulfonated-EPDM, styrene butadiene rubber (SBR), fluorine rubber, or various copolymers thereof, and one kind alone or mixtures of two or more kinds thereof may be used. The binder may be included in an amount of 1 to 30 wt% based on the total weight of the positive electrode active material layer.

The positive electrode can be manufactured according to conventional positive electrode manufacturing methods except for using the aforementioned positive electrode active material. Specifically, it can be manufactured by coating a composition for forming positive electrode active material layer comprising the aforementioned positive electrode active material and optionally, binder and conductive material on a positive electrode current collector, followed by drying and rolling. At this time, the types and contents of positive electrode active material, binder, and conductive material are as described above.

Alternatively, the positive electrode can also be manufactured by casting the composition for forming positive electrode active material layer on a separate support, then laminating the film obtained by peeling from this support onto the positive electrode current collector.

According to another embodiment of the present invention, an electrochemical device comprising the positive electrode is provided. The electrochemical device may specifically be a battery or capacitor, and more specifically may be a lithium secondary battery. The lithium secondary battery specifically comprises a positive electrode, a negative electrode positioned opposite to the positive electrode, a separator interposed between the positive electrode and negative electrode, and an electrolyte, wherein the positive electrode is as described above.

Also, the lithium secondary battery may optionally further include a battery case housing the electrode assembly of the positive electrode, negative electrode, separator, and a sealing member sealing the battery case.

In the lithium secondary battery, the negative electrode comprises a negative electrode current collector and a negative electrode active material layer positioned on the negative electrode current collector.

The negative electrode current collector is not particularly limited as long as it has high conductivity without causing chemical changes in the battery, and for example, copper, stainless steel, aluminum, nickel, titanium, sintered carbon, copper or stainless steel surface-treated with carbon, nickel, titanium, silver, aluminum-cadmium alloy, etc. may be used. Also, the negative electrode current collector typically may have a thickness of 3 to 500 µm, and like the positive electrode current collector, fine irregularities may be formed on the surface of the current collector to strengthen binding with negative electrode active material. For example, it can be used in various forms such as film, sheet, foil, net, porous body, foam, nonwoven fabric, etc.

The negative electrode active material layer includes negative electrode active material and optionally binder and conductive material. The negative electrode active material layer can be manufactured, for example, by coating a composition for forming negative electrode containing negative electrode active material, and optionally binder and conductive material on the negative electrode current collector and drying, or by casting the composition for forming negative electrode on a separate support, then laminating the film obtained by peeling from this support onto the negative electrode current collector.

As the negative electrode active material, compounds capable of reversible intercalation and deintercalation of lithium may be used. Specific examples include carbonaceous materials such as artificial graphite, natural graphite, graphitized carbon fiber, amorphous carbon; metallic compounds capable of forming alloys with lithium such as Si, Al, Sn, Pb, Zn, Bi, In, Mg, Ga, Cd, Si alloys, Sn alloys or Al alloys; metal oxides capable of doping and dedoping lithium such as SiO_{β} (0<β<2), SnO₂, vanadium oxide, lithium vanadium oxide; or composites containing the above metallic compounds and carbonaceous materials such as Si-C composites or Sn-C composites, and one or more mixtures of these may be used. Also, metal lithium foil may be used as the negative electrode active material. Also, carbon materials may include both low crystalline carbon and high crystalline carbon. Representative examples of low crystalline carbon include soft carbon and hard carbon, and representative examples of high crystalline carbon include high-temperature sintered carbon such as amorphous, plate-like, flaky, spherical or fiber-type natural graphite or artificial graphite, Kish graphite, pyrolytic carbon, mesophase pitch based carbon fiber, meso-carbon microbeads, mesophase pitches, and petroleum or coal tar pitch derived cokes.

Also, the binder and conductive material may be the same as described above for the positive electrode.

The electrolyte may further include one or more additives such as, for example, haloalkylene carbonate compounds like difluoro ethylene carbonate, pyridine, triethyl phosphite, triethanolamine, cyclic ether, ethylene diamine, n-glyme, hexaphosphoric triamide, nitrobenzene derivatives, sulfur, quinone imine dyes, N-substituted oxazolidinone, N,N-substituted imidazolidine, ethylene glycol dialkyl ether, ammonium salts, pyrrole, 2-methoxy ethanol or aluminum trichloride for purposes such as improving battery life characteristics, suppressing battery capacity reduction, improving battery discharge capacity, etc. in addition to the above electrolyte components. At this time, the additive may be included in an amount of 0.1 to 5 wt% based on the total weight of the electrolyte. As described above, lithium secondary batteries comprising the positive electrode active material according to the present invention stably exhibit excellent discharge capacity, output characteristics and capacity retention, making them useful in portable device fields such as mobile phones, laptop computers, digital cameras, and electric vehicle fields such as hybrid electric vehicles (HEV).

Accordingly, according to another embodiment of the present invention, there is provided a battery module comprising the lithium secondary battery as a unit cell and a battery pack comprising the same.

The battery module or battery pack can be used as a power source for one or more large devices among Power Tools; Electric Vehicles (EV), Hybrid Electric Vehicles, and Plug-in Hybrid Electric Vehicles (PHEV); or power storage systems.

### [Examples]

Hereinafter, examples of the present invention will be described in detail so that those skilled in the art can easily carry out the present invention. However, the present invention can be implemented in various different forms and is not limited to the examples described herein.

### Example: Manufacturing Positive Electrode

A first mixture was prepared by mixing 91 wt% of first positive electrode active material and 8 wt% of solid electrolyte, then adding 1 wt% of binder. After agglomerating the first mixture using a mortar and pestle, a first positive electrode layer was manufactured using a roll press.

A second mixture was prepared by mixing 85 wt% of second positive electrode active material and 13 wt% of solid electrolyte, then adding 1 wt% of conductive material and 1 wt% of binder.

After agglomerating the second mixture using a mortar and pestle, a second positive electrode layer was manufactured using a roll press.

A positive electrode was manufactured by overlapping the manufactured first positive electrode layer and second positive electrode layer and roll pressing or isostatic pressing.

### Comparative Example 1

A mixture was prepared containing 88 wt% of (primary particle) positive electrode active material, 10.5 wt% of solid electrolyte, 0.5 wt% of conductive material and 1 wt% of binder. After agglomerating the mixture using a mortar and pestle, a positive electrode was manufactured using a roll press.

### Comparative Example 2

A mixture was prepared containing 88 wt% of (secondary particle) positive electrode active material, 10.5 wt% of solid electrolyte, 0.5 wt% of conductive material and 1 wt% of binder. After agglomerating the mixture using a mortar and pestle, a positive electrode was manufactured using a roll press.

### Experimental Example 1: Evaluation of Battery Performance

Batteries were manufactured comprising the positive electrodes manufactured in Example and Comparative Examples 1 and 2, sulfide-based solid electrolyte, and Li-metal. The manufactured batteries were evaluated for initial capacity, rate characteristics and life characteristics at 60°C as follows.

### (1) Initial Capacity

The manufactured battery was charged (CC/CV) to 4.25 V at 0.1C-rate current density, and charging was terminated when the current density reached 0.05C-rate. Also, discharge (CV) was completed to 3.0 V at 0.1C-rate current density. The measured initial capacity is shown in Table 1 below.

### (2) Rate Characteristics

Charging was performed (CC/CV) to 4.25 V at 0.1C-rate current density, and charging was terminated when the current density reached 0.05C-rate. Rate characteristics were measured at discharge current densities of 0.1C, 0.2C, 0.33C respectively. The measured rate characteristics are shown in Table 1 below.

### (3) Life Characteristics

Charging was performed (constant current (CC)/constant voltage (CV)) to 4.25 V at 0.2C-rate current density, and charging was terminated when the current density reached 0.1C-rate. Also, discharge (CV) was completed to 3.0 V at 0.2C-rate current density. This charge/discharge was repeated 50 times.

**[Table 1]**

| | Charge (mAh/g) | Discharge (mAh/g) | Coulomb Efficiency (%) | Loading Level (mg/cm²) | 0.33C capacity (mAh/g) | 50 cycle retention rate (%) |
|---|---|---|---|---|---|---|
| Example | 209 | 190 | 91 | 8.5 | 110 | 89 |
| Comparative Example 1 | 210 | 171 | 81 | 8.4 | 65 | 79 |
| Comparative Example 2 | 212 | 162 | 76 | 8.5 | 70 | 68 |

As shown in Table 1 above, it was confirmed that the battery comprising the positive electrode according to Example had significantly larger capacity and higher 50-cycle retention rate compared to batteries comprising the positive electrodes according to Comparative Examples 1 and 2.

### [Description of Reference Numerals]

1: Secondary battery
10: Positive electrode
11: First positive electrode layer
11a: First active material particles
12: Second positive electrode layer
12a: Second active material particles
12b: Binder
20: Solid electrolyte
30: Negative electrode
100: Positive electrode current collector
200: Negative electrode current collector

## Claims

1. A positive electrode for a secondary battery, comprising:
a first positive electrode layer and a second positive electrode layer,
wherein the first positive electrode layer comprises a first positive electrode active material composed of first active material particles having a primary particle form, and
the second positive electrode layer comprises a second positive electrode active material composed of second active material particles having a secondary particle form in which primary particles are agglomerated.

2. The positive electrode for a secondary battery of claim 1, wherein a content of the first positive electrode active material is 90 wt% or more based on a total weight of the first positive electrode layer.

3. The positive electrode for a secondary battery of claim 1, wherein when a content of the first positive electrode active material is 90 wt% or more based on a total weight of the first positive electrode layer, the first positive electrode active material comprises a first coating layer on a surface of the first active material particles, and
the first coating layer comprises a solid electrolyte.

4. The positive electrode for a secondary battery of claim 3, wherein the first coating layer includes an island shape partially exposing the surface of the first active material particles.

5. The positive electrode for a secondary battery of claim 3, wherein the content of the first coating layer is 5 wt% or less based on the total weight of the first positive electrode layer.

6. The positive electrode for a secondary battery of claim 1, wherein the solid electrolyte is a sulfide-based solid electrolyte, oxide-based solid electrolyte or halide-based solid electrolyte.

7. The positive electrode for a secondary battery of claim 1, wherein when a content of the first positive electrode active material is 90 wt% or more based on the total weight of the first positive electrode layer, the first positive electrode active material does not contain conductive material.

8. The positive electrode for a secondary battery of claim 1, wherein:
the positive electrode is interposed between a solid electrolyte layer and a positive electrode current collector,
the first positive electrode layer is in contact with one surface of the solid electrolyte layer, and
the second positive electrode layer is in contact with one surface of the current collector.

9. The positive electrode for a secondary battery of claim 1, wherein a content of the second positive electrode active material is 50 wt% or more and less than 90 wt% based on a total weight of the second positive electrode layer.

10. The positive electrode for a secondary battery of claim 1, wherein the secondary battery is an all-solid-state battery.

11. The positive electrode for a secondary battery of claim 1, wherein the positive electrode is a dry electrode.

12. The positive electrode for a secondary battery of claim 1, wherein a loading level of the positive electrode is 7 mAh/cm² or more.

13. A method of manufacturing a positive electrode for a secondary battery, comprising:
(S1) preparing a first mixture comprising a first positive electrode active material, solid electrolyte, conductive material and/or binder;
(S2) preparing a second mixture comprising a second positive electrode active material, solid electrolyte, conductive material and/or binder;
(S3) pressing each of the first mixture and second mixture to prepare a first positive electrode plate and a second positive electrode plate; and
(S4) pressing after bringing the first positive electrode plate and second positive electrode plate into contact with each other.

14. The method of manufacturing a positive electrode for a secondary battery of claim 13, wherein in steps (S1) and (S2), solvent is not included.

15. A lithium secondary battery comprising:
the positive electrode according to any one of claims 1 to 12;
a negative electrode; and
a solid electrolyte interposed between the positive electrode and negative electrode.
